# EUROPEAN PATENT SPECIFICATION

(11) **EP 0 794 886 B1**
(45) Date of publication and mention of the grant of the patent: **22.09.1999**
(21) Application number: 95925577.9
(22) Date of filing: 10.07.1995
(51) Int. Cl.: B60T 8/36, F16K 31/06

(54) **ELECTROMAGNETIC SOLENOID VALVE FOR HYDRAULICALLY ACTUATED BRAKE SYSTEMS WITH SLIP CONTROL**
ELEKTROMAGNETVENTIL FÜR HYDRAULISCH BETÄTIGTE BREMSSYSTEME MIT SCHLUPFREGELUNG
VANNE ELECTROMAGNETIQUE POUR SYSTEMES DE FREINAGE HYDRAULIQUES ANTIPATINAGE

(30) Priority: 07.12.1994 US 350789
(43) Date of publication of application: 17.09.1997
(73) Proprietor: ITT INDUSTRIES, INC., Wilmington, Delaware 19801 (US)
(72) Inventor: KAYSER, Michael, Asheville, NC 28803 (US); KINKADE, Stuart, Hendersonville, NC 28792 (US); BURRELL, Gary, R., Hendersonville, NC 28739 (US)
(74) Representative: Portwich, Peter
(86) International application number: US9508583
(87) International publication number: WO9617756

(56) References cited:
- DE-A- 2 504 521
- DE-A- 4 141 354
- DE-A- 4 313 384
- FR-A- 820 952
- FR-A- 1 525 580
- GB-A- 1 533 774
- US-A- 1 883 240
- US-A- 2 819 432
- US-A- 4 805 870
- US-A- 5 346 176

## Description

This invention is related to electromagnetic solenoid valves and more particularly to such valves as employed in hydraulically actuated brake systems with slip control.

In a known type of electromagnetic solenoid valve configuration, a valve cover closes one end of a bore in a valve housing. The valve cover has a portion which extends down into the housing bore. A bore in the cover, together with the bore in the housing, defines an axial void. A valve needle and a solenoid armature, joined for unitary movement, are slidably disposed in the void. A solenoid coil surrounds part of the cover, with the cover serving as the solenoid core. A disadvantage of the above described configuration is that it provides an opportunity for the introduction of metal shavings or chips and other unwanted debris to enter the sliding portion of the valve during assembly. The valve is particularly vulnerable to such contamination after the valve needle and amature have been installed, but before the valve cover have been installed. Even the installation of the valve cover presents a risk of introducing unwanted debris. The valve cover may be carrying chips generated during its foming.

An electromagnetic solenoid valve for use with hydraulically actuated brake systems is disclosed in DE-A-4 313 384 comprising a valve housing having a stepped bore therein defining an axis and a generally cylindrical valve sleeve, with an open end portion and a closed end portion, with the open end portion disposed over a first portion of the bore to define a void. A solenoid core is fixed within the void. A solenoid armature is slidably disposed in the void. A valve needle engages the armature for movement between open and closed positions. A solenoid coil is disposed within the valve housing. A valve cover is located at an end of the housing, closing the bore. The valve sleeve penetrates the valve cover providing a magnetic flux between the core within the valve sleeve and the valve cover.

It is therefore an object of the invention to provide a reconfigured valve with an improved fastening means for the valve sleeve.

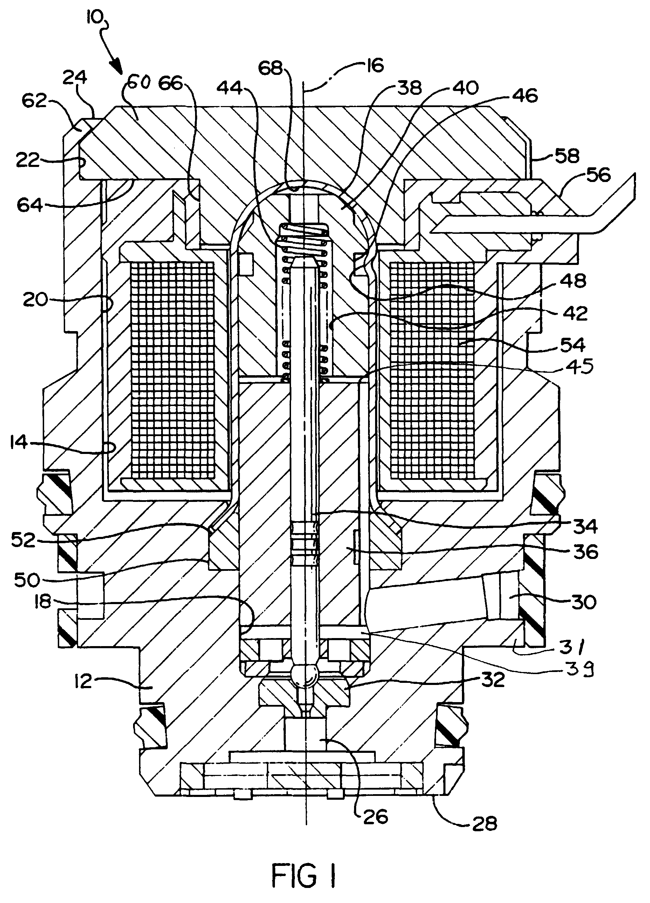

The sole figure 1 is a cross sectional view of one embodiment of a solenoid valve according to the invention. An electromagnetic solenoid valve 10 has a valve housing 12 with a stepped bore 14. The bore 14 defines an axis 16 on which are centered a plurality of portions of the bore 14. The bore has a first portion 18 with a first diameter, a second portion 20 with a second diameter larger than the first diameter, and a third portion 22 with a third diameter larger than the second diameter. The first portion 18 of the bore opens into the second portion 20 which opens into the third portion 22 of the bore 14. The third portion 22 of the bore 14 is at a first end portion 24 of the valve housing 12. The first portion 18 of the bore 14 is distal to the first end portion 24 of the valve housing 12. A first hydraulic fluid duct 26 passes from a second end portion 28 of the housing 12 into the first portion 18 of the bore 14. A second hydraulic fluid duct 30 passes from a side 31 of the valve housing 12 to the first portion 18 of the bore. A valve seat 32 is disposed at a bottom of the first portion 18 of the bore 14, over the first hydraulic fluid duct 26. A valve needle 34 is disposed in part in the first portion 18 of the bore 14 along the bore axis 16. A tip of the valve needle 34 operably engages the valve seat 32 in a closed position shown in the figure, thereby blocking fluid communication between the first hydraulic fluid duct 26 and the second hydraulic duct 30.

A solenoid armature 36 formed of magnetically permeable material is fixed to the valve needle 34. A plurality of circumferential grooves on the valve needle 34 are engaged by the armature 36 such that the needle 34 and the armature 36 move as a unit.

A valve sleeve 38 is substantially bullet shaped, or cylindrical, with a closed end portion and an opposed open end portion. The valve sleeve 38 is disposed over the first portion 18 of the bore 14 to define a void 39 therein. The valve needle 34 and the solenoid armature 36 are slidably disposed in the void 39. A solenoid core 40, also formed of magnetically permeable material, is disposed at the closed end portion of the valve sleeve 38. The solenoid core 40 has a central stepped bore 42 passing therethrough.

A return spring 44 is disposed in the stepped bore 42 of the core 40 with one end disposed against a shoulder in the core 40 defined by the stepped bore 42, and a second ad disposed against the solenoid armature 36. An upper end of the valve needle 34 extending beyond the armature 36 is disposed in the stepped bore 42 ad surrounded by the return spring 44. The return spring 44 biases the armature 36 away from the core 42, thereby pressing the tip of the valve needle 34 against the valve seat 32. With the valve needle 34 seated, the core 42 and armature are separated by a gap 45.

The core 40 has a circumferential groove 46 therearound. The valve sleeve 38 has at least one dimple 48 deflecting into the circumferential groove 46 to retain the core 40 at the end of the sleeve 38.

A bushing 50 is installed in the valve housing 12 at a bottom of the first portion 18 of the bore 14. The bushing 50 has a inside diameter substantially equal to the diameter of the first portion 18 of the bore 14. An outer surface of the bushing 50 defines a upwardly directed frustoconical surface 52. The open end portion of the valve sleeve 38 has a shape complimentary to that of the frustoconical surface 52, and is disposed thereover. A portion of the housing 12 around the bushing 50 ad the sleeve 38 is cold formed to provide a lip over the open end portion of the sleeve 38. The lip presses against the open end portion of the sleeve 38, maintaining the sleeve in engagement with the frustoconical surface 52 of the bushing 50. It is readily apparent that the sliding parts of the electromagnetic solenoid valve 10 are disposed within the void 39 formed between the sleeve 38 ad the housing 12. The sleeve 38 provides the parts disposed therein with a high degree of protection from any subsequently introduced debris, such as metal chips or the like, with may potentially be introduced during subsequent assembly operations. Such debris can fall between the armature 36 and the first bore portion 18, causing the armature 36 to bind.

An annular solenoid coil 54 is placed over the valve sleeve 38, in the second portion 20 of the bore 14. The term coil 54 includes any frame or structure in addition to coil windings. A wire terminal 56 of the coil 54 extends from the coil 54 and passed through slot 58 in the first end portion 24 of the housing 12 to an outside of the housing 12.

A valve end cover 60 is disposed in the third portion 22 of the bore 14. The end cover 60 is retained in the housing 12 by cold forming the first end portion 24 of the housing 12 to form a lip 62 disposed over a outer circumference of the cover 60. The cover 60 has a bottom surface including an annular surface 64 engaging both a shoulder of the housing 12 and an upper surface of the coil 54. Projecting axially downward from the annular surface 64 is a plug portion 66 of the cover 60. The plug portion 66 extends into the solenoid coil 54, helping to center the coil in the second portion 20 of the bore 14. The plug portion 66 has a hemispherical seating surface 68 engaging the closed end of the valve sleeve 38 which has a similar shape. The cover 60 helps retain both the annular magnetic coil 54 and the sleeve 38 in the valve 12.

The valve 10 is a normally closed valve. The return spring 44 biases the needle to the closed position. Energization of the solenoid valve causes the armature 36 and the needle 34 to be drawn toward the core 40 to an open position in which the tip of the needle 40 is spaced from the seat 32.

In known valves over which the present invention offers an improvement, the closed end sleeve 38 is not provided, and the cover 60 and core 40 are formed as an integral piece. The presently disclosed valve introduces extra parts and assembly operations into the fabrication of the valve, which would typically be expected to result in a decrease in valve reliability. However, the net effect on valve reliability is just the opposite, with the shielding of the sliding needle ad armature providing an appreciable increase in the reliability of valve operation.

Other aspects, objects, and advantages of this invention can be obtained from a study of the drawings, the disclosure and the appended claims.

## Claims

1. An electromagnetic solenoid valve (10) for use with hydraulically actuated brake system comprising:
a valve housing (12) having a stepped bore (14) therein defining an axis (16);
a generally cylindrical valve sleeve (38) with an open end portion and an opposed closed end portion with the open end portion disposed over a first portion (18) of the bore (14) to define a void (39) therein;
a solenoid armature (36) slidably disposed within the void (39) for axial movement therein;
a valve needle (34) engaging the solenoid armature (36) for movement therewith between open and closed positions;
a solenoid core (40) disposed in the void (39);
a spring (44) operably disposed between the solenoid armature (36) and the solenoid core (40);
an annular solenoid coil (54) disposed within the valve housing (12) and circumscribing the valve sleeve (38); and
a valve cover (60) disposed at an end portion (24) of the valve housing (12) thereby closing the bore (14), wherein a seating surface (68) at the bottom of the valve cover (60) engages the closed end of the valve sleeve (38) and retains the valve sleeve (38) in the valve housing (12).

2. An electromagnetic solenoid valve as claimed in claim 1, wherein the valve cover (60) engages the solenoid coil (54).

3. An electromagnetic solenoid valve as claimed in claim 1, wherein the valve cover (60) engages the valve sleeve (38).

4. An electromagnetic solenoid valve as claimed in claim 1, wherein the valve cover (60) has an annular engaging surface engaging the portion of the valve sleeve (38) covering the solenoid core (40), and a seating surface (68) embodied as a recess which engages the closed end of the valve sleeve (38).

5. An electromagnetic solenoid valve (10) for use with hydraulically actuated brake system as claimed in claim 1 comprising:
a valve housing (12) having a stepped bore (14) entering the valve housing (12) from a first end portion (24) of the valve housing (12) and defining therein an axis (16) of the bore (14) and both a first portion (18) of the bore (14) and a larger diameter second portion (20) of the bore (14), wherein the second portion (20) of the bore (14) is more proximate to the first end portion (24) of the valve housing (12) than the first portion (18) of the bore (14);
a valve needle (34) operably engaging a valve seat (32) within the valve housing (12);
a solenoid core (40) fixedly disposed in the void (39);
an annular solenoid coil (54) disposed within the second part of the stepped bore (14) of the valve housing (12) and circumscribing the valve sleeve (38);
and a valve cover (60) engaging the valve housing (12) at the first end portion (24) of the valve housing (12) and sized to close the bore (14).

6. An electromagnetic solenoid valve as claimed in claim 5, wherein the valve cover (60) engages the solenoid coil (54).

7. An electromagnetic solenoid valve as claimed in claim 5, wherein the valve cover (60) engages the valve sleeve (38).

8. An electromagnetic solenoid valve as claimed in claim 5, wherein the valve cover (60) has an annular engaging surface engaging the portion of the valve sleeve (38) covering the solenoid core (40), and a seating surface (68) embodied as a recess which engages the valve sleeve (38).

## Patentansprüche

1. Ein Elektromagnetventil (10) zur Verwendung bei hydraulisch betätigten Bremssystemen, das:
ein Ventilgehäuse (12) mit einer darin befindlichen und darin eine Achse (16) definierenden Stufenbohrung (14);
eine im allgemeinen zylindrische Ventilhülse (38) mit einem geschlossenen Endabschnitt und einem entgegengesetzten offenen Endabschnitt, wobei der offene Endabschnitt über einem ersten Abschnitt (18) der Bohrung (14) angeordnet ist und einen Hohlraum (39) darin definiert;
einen Magnetanker (36), der gleitend in dem Hohlraum (39) zwecks darin erfolgender Axialbewegung angeordnet ist;
einen mit dem Magnetanker (36) zur Bewegung mit ihm zwischen einer offenen und einer geschlossenen Stellung in Eingriff stehenden Ventilstößel (34);
einen im Hohlraum (39) angeordneten Magnetkern (40);
eine zwischen dem Magnetanker (36) und dem Magnetkern (40) für einen Wirkeingriff angeordnete Feder (44);
eine im Ventilgehäuse (12) angeordnete und die Ventilhülse (38) umgrenzende ringförmige Magnetspule (54); und
einen Ventildeckel (60) umfasst, der an einem Endabschnitt (24) des Ventilgehäuses (12) angeordnet ist und dadurch die Bohrung (14) verschließt, wobei eine Sitzfläche (68) am Boden des Ventildeckels (60) mit dem geschlossenen Ende der Ventilhülse (38) in Eingriff steht und die Ventilhülse (38) im Ventilgehäuse (12) hält.

2. Ein Elektromagnetventil nach Anspruch 1, wobei der Ventildeckel (60) mit der Magnetspule (54) in Eingriff steht.

3. Ein Elektromagnetventil nach Anspruch 1, wobei der Ventildeckel (60) mit der Ventilhülse (38) in Eingriff steht.

4. Ein Elektromagnetventil nach Anspruch 1, wobei der Ventildeckel (60) eine ringförmige Eingriffsfläche, die mit dem den Magnetkern (40) abdeckenden Abschnitt der Ventilhülse (38) in Eingriff kommt, und eine als Aussparung ausgebildete Sitzfläche (68) aufweist, die mit dem geschlossenen Ende der Ventilhülse (38) in Eingriff steht.

5. Ein Elektromagnetventil (10) zur Verwendung bei hydraulisch betätigten Bremssystemen nach Anspruch 1, das:
ein Ventilgehäuse (12) mit einer Stufenbohrung (14), die von einem ersten Endabschnitt (24) des Ventilgehäuses (12) aus in das Ventilgehäuse (12) eintritt und darin eine Achse (16) der Bohrung (14) und sowohl einen ersten Abschnitt (18) der Bohrung (14) und einen zweiten Abschnitt (20) der Bohrung (14) mit größerem Durchmesser definiert, wobei der zweite Abschnitt (20) der Bohrung (14) dichter zum ersten Endabschnitt (24) des Ventilgehäuses (12) hin gelegen ist als der erste Abschnitt (18) der Bohrung (14);
einen mit dem Ventilsitz (32) im Ventilgehäuse (12) in Wirkeingriff stehenden Ventilstößel (34);
einen fest im Hohlraum (39) angeordneten Magnetkern (40);
eine im zweiten Teil der Stufenbohrung (14) des Ventilgehäuses (12) angeordnete und die Ventilhülse (38) umgrenzende ringförmige Magnetspule (54);
und einen Ventildeckel (60) umfasst, der mit dem Ventilgehäuse (12) am ersten Endabschnitt (24) des Ventilgehäuses (12) in Eingriff steht und größenmäßig so konstruiert ist, dass er die Bohrung (14) verschließt.

6. Ein Elektromagnetventil nach Anspruch 5, wobei der Ventildeckel (60) mit der Magnetspule (54) in Eingriff steht.

7. Ein Elektromagnetventil nach Anspruch 5, wobei der Ventildeckel (60) mit der Ventilhülse (38) in Eingriff steht.

8. Ein Elektromagnetventil nach Anspruch 5, wobei der Ventildeckel (60) eine ringförmige Eingriffsfläche` die mit dem den Magnetkern (40) abdeckenden Abschnitt der Ventilhülse (38) in Eingriff steht, und eine als Aussparung ausgebildete Sitzfläche (68) aufweist, die mit der Ventilhülse (38) in Eingriff steht.

## Revendications

1. Valve électromagnétique (10) à électro-aimant, destinée à être utilisée avec un système de freinage à actionnement hydraulique, comprenant :
un corps de valve (12) dans lequel est ménagé un alésage étagé (14) définissant un axe (16),
un fourreau de valve (38) dans l'ensemble cylindrique comportant une partie d'extrémité ouverte et, à l'opposé, une partie d'extrémité fermée, la partie d'extrémité ouverte étant disposée au-dessus d'une première partie (18) de l'alésage (14) de façon à définir une cavité (39) dans celui-ci,
une armature mobile d'électro-aimant (36) disposée d'une manière coulissante dans la cavité (39) de façon à se déplacer axialement dans celle-ci,
une aiguille de valve (34) coopérant avec l'armature d'électro-aimant (36) de façon à se déplacer avec celle-ci entre des positions ouverte et fermée,
une culasse d'électroaimant (40) disposée dans la cavité (39),
un ressort (44) disposé fonctionnellement entre l'armature mobile d'électro-aimant (36) et la culasse d'électro-aimant (40),
une bobine d'électro-aimant (54) annulaire disposée dans le corps de valve (12) et entourant le fourreau de valve (38) et
un couvercle de valve (60) disposé à l'endroit d'une partie d'extrémité (24) du corps de valve (12), fermant ainsi l'alésage (14), une surface de siège (68) située au fond du couvercle de valve (60) étant au contact de l'extrémité fermée du fourreau de valve (38) et retenant le fourreau de valve (38) dans le corps de valve (12).

2. Valve électromagnétique à électro-aimant telle que revendiquée à la revendication 1, dans laquelle le couvercle de valve (60) est au contact de la bobine d'électro-aimant (54).

3. Valve électromagnétique à électro-aimant telle que revendiquée à la revendication 1, dans laquelle le couvercle de valve (60) est au contact du fourreau de valve (38).

4. Valve électromagnétique à électro-aimant telle que revendiquée à la revendication 1, dans laquelle le couvercle de valve (60) présente une surface annulaire de contact, qui est au contact de la partie du fourreau de valve (38) couvrant la culasse d'électro-aimant (40), et une surface de siège (68), réalisée sous forme d'une partie en retrait, qui est au contact de l'extrémité fermée du fourreau de valve (38).

5. Valve électromagnétique (10) à électro-aimant, destinée à être utilisée avec un système de freinage à actionnement hydraulique, telle que revendiquée à la revendication 1, comprenant :
un corps de valve (12) présentant un alésage étagé (14) pénétrant dans le corps de valve (12) à partir d'une première partie d'extrémité (24) du corps de valve (12) et définissant dans celui-ci un axe (16) de l'alésage (14) et à la fois une première partie (18) de l'alésage (14) et une deuxième partie (20) de plus grand diamètre de l'alésage (14), la deuxième partie (20) de l'alésage (14) étant plus proche de la première partie d'extrémité (24) du corps de valve (12) que la première partie (18) de l'alésage (14),
une aiguille de valve (34) coopérant fonctionnellement avec un siège de valve (32) disposé dans le corps de valve (12),
une culasse d'électro-aimant (40) disposée de manière fixe dans la cavité (39),
une bobine d'électro-aimant (54) annulaire disposée dans la deuxième partie de l'alésage étagé (14) du corps de valve (12) et entourant le fourreau de valve (38),
et un couvercle de valve (60) coopérant avec le corps de valve (12) à l'endroit de la première partie d'extrémité (24) du corps de valve (12) et dimensionné de façon à fermer l'alésage (14).

6. Valve électromagnétique à électroaimant telle que revendiquée à la revendication 5, dans laquelle le couvercle de valve (60) est au contact de la bobine d'électro-aimant (54).

7. Valve électromagnétique à électro-aimant telle que revendiquée à la revendication 5, dans laquelle le couvercle de valve (60) est au contact du fourreau de valve (38).

8. Valve électromagnétique à électro-aimant telle que revendiquée à la revendication 5, dans laquelle le couvercle de valve (60) présente une surface annulaire de contact, qui est au contact de la partie du fourreau de valve (38) couvrant la culasse d'électro-aimant (40), et une surface d'appui (68), réalisée sous forme d'une partie en retrait, qui est au contact du fourreau de valve (38).
